# EUROPEAN PATENT APPLICATION

(11) **EP 4 579 483 A1**
(43) Date of publication of application: **02.07.2025**
(21) Application number: 23875017.8
(22) Date of filing: 18.07.2023
(51) Int. Cl.: G06F 16/532, G06F 16/55, G06F 16/583, G06F 16/587, G06F 16/29, G06F 3/01, H04N 13/344

(54) **ELECTRONIC DEVICE FOR GENERATING IMAGE QUERY FOR OBJECT SEARCH, AND OPERATION METHOD OF ELECTRONIC DEVICE**

(30) Priority: 04.10.2022 KR 20220126615; 25.11.2022 KR 20220160744
(71) Applicant: Samsung Electronics Co., Ltd., Suwon-si, Gyeonggi-do 16677 (KR)
(72) Inventor: KIM, Daehee, Suwon-si, Gyeonggi-do 16677 (KR); KIM, Beomsu, Suwon-si, Gyeonggi-do 16677 (KR); KIM, Sungoh, Suwon-si, Gyeonggi-do 16677 (KR); YEOM, Donghyun, Suwon-si, Gyeonggi-do 16677 (KR)
(74) Representative: Gulde & Partner
(86) International application number: PCT/KR2023/010321
(87) International publication number: WO 2024/075947

(57) **Abstract**

An electronic device according to various embodiments may include a camera, a communication module, and a processor, wherein the processor: extracts, from an image acquired from the camera, a portion of the image including objects; determines a primary object that is a target of search, among the objects within the image; determines a secondary object associated with the primary object, among other objects within the image; generates an image query including a portion of the image including the primary object and/or the secondary object a request for information associated with the primary object; and transmits the image query to a server through the communication module. Various other embodiments are possible.

## Description

### [Technical Field]

Various embodiments disclosed in the disclosure relate to an electronic device for generating an image query for searching for objects, and an operation method of the electronic device.

### [Background Art]

Augmented reality glasses (AR glasses), which are HMD devices in the form of glasses, are the next-generation personal devices, and various functions capable of being applied to AR glasses are being developed.

Meanwhile, a query image searching method is a technology for searching for specific objects in an image by using deep learning. In this case, a specific object area may be extracted from a camera or a stored image, and the specific object area and image information may be transmitted to a server, thereby extracting information about the object.

### [Disclosure of Invention]

### [Technical Problem]

When performing a query image search using an image containing multiple objects, accurate search results may not be obtained depending on the arrangement of the respective objects. For example, when searching for information about a "shirt" worn by a model in an image, the electronic device may separate the area for the "shirt" from the image and transmit the "shirt" to a server, and the server may transmit information about the "shirt" to the electronic device. In this case, if the "shirt" is covered by other coordination items such as a cardigan or jacket, accurate search results may not be obtained.

The technical problems to be solved by the disclosure are not limited to the technical problems mentioned above, and other technical problems not mentioned may be clearly understood by those skilled in the art to which the present invention belongs from the description below.

### [Solution to Problem]

An electronic device according to various embodiments of the disclosure may include a camera, a communication module, and a processor, and the processor may extract, from an image obtained from the camera, a portion of an image including objects, determine a primary object to be searched for from among the objects in the image, determine an object associated with the primary object as a secondary object from among other objects in the image, generate an image query including a portion of an image including the primary object and/or the secondary object, and including a request for information related to the primary object, and transmit the image query to a server by using the communication module.

An operation method of an electronic device according to various embodiments of the disclosure may include extracting, from an image obtained from a camera, a portion of an image including objects, determining a primary object to be searched for from among the objects in the image, determining an object associated with the primary object as a secondary object from among other objects in the image, generating an image query including a portion of an image including the primary object and/or the secondary object, and transmitting the image query to a server.

A system according to various embodiments of the disclosure may include a server and an electronic device, wherein the electronic device may include a camera, a communication module, and a processor, and the processor may extract, from an image obtained from the camera, a portion of an image including objects, determine a primary object to be searched for from among the objects in the image, determine an object associated with the primary object as a secondary object from among other objects in the image, generate an image query including a portion of an image including the primary object and/or the secondary object, and including a request for information related to the primary object, and transmit the image query to a server by using the communication module, and the server may search for information related to the primary object, based on the image query, and transmit information related to the primary object, as a search result, to the electronic device.

### [Advantageous Effects of Invention]

The electronic device according to various embodiments of the disclosure is able to increase the range of the pool for image search, thereby increasing the accuracy of the results.

For example, the electronic device may increase the accuracy of the results by using information about an object, as ancillary data, related to the object to be searched for.

For example, the electronic device may increase the accuracy of the results for the object to be searched for by using the user's position information as ancillary data.

### [Brief Description of Drawings]

In relation to the description of the drawings, the same or similar reference numerals will be used for the same or similar components.
FIG. 1 is a block diagram of an electronic device in a network environment according to various embodiments.
FIG. 2A is a diagram illustrating the configuration of an electronic device according to various embodiments.
FIG. 2B is a block diagram of an electronic device according to various embodiments.
FIG. 3 is a flowchart illustrating a method for a processor to generate an image query for an object and display information according to various embodiments.
FIG. 4A is a flowchart illustrating a method for a processor to generate an image query for an object according to various embodiments.
FIG. 4B is a diagram illustrating an example in which a processor determines a primary object and a secondary object according to various embodiments.
FIG. 4C is a diagram illustrating an example in which a processor determines a primary object and a secondary object according to various embodiments.
FIG. 4D is a diagram illustrating an example in which a processor determines a primary object and a secondary object according to various embodiments.
FIG. 4E is a diagram illustrating an example in which a processor determines a primary object and a secondary object according to various embodiments.
FIG. 5 is a flowchart illustrating a method in which a processor identifies information related to an object, based on position information, according to various embodiments.
FIG. 6 is a flowchart illustrating a method in which a server searches for an object according to various embodiments.
FIG. 7 is a flowchart illustrating a method in which a processor searches for an object of interest according to various embodiments.

### [Mode for the Invention]

According to various embodiments, an electronic device may search for information about an object by using a query image generated by separating an object to be searched for from an image. The electronic device may perform search using a secondary object associated with an object to be searched for, as well as the object to be searched for. This is due to the fact that related items are often matched together, so data on related items that are matched together may be used for search from the database, which increases the pool of search targets, so that the accuracy of the search may be increased. For example, if shirt A and jacket B are often coordinated together, information about jacket B may be supplementarily provided in addition to shirt A when searching for an image, thereby increasing the accuracy of the search for shirt A.

In addition, the electronic device according to various embodiments may add information about the object to be searched for with reference to the user's position. For example, if the user is positioned at "store A" in a shopping mall, the electronic device may further use information related to "brand A" for the object to be searched for, thereby increasing the accuracy of the search.

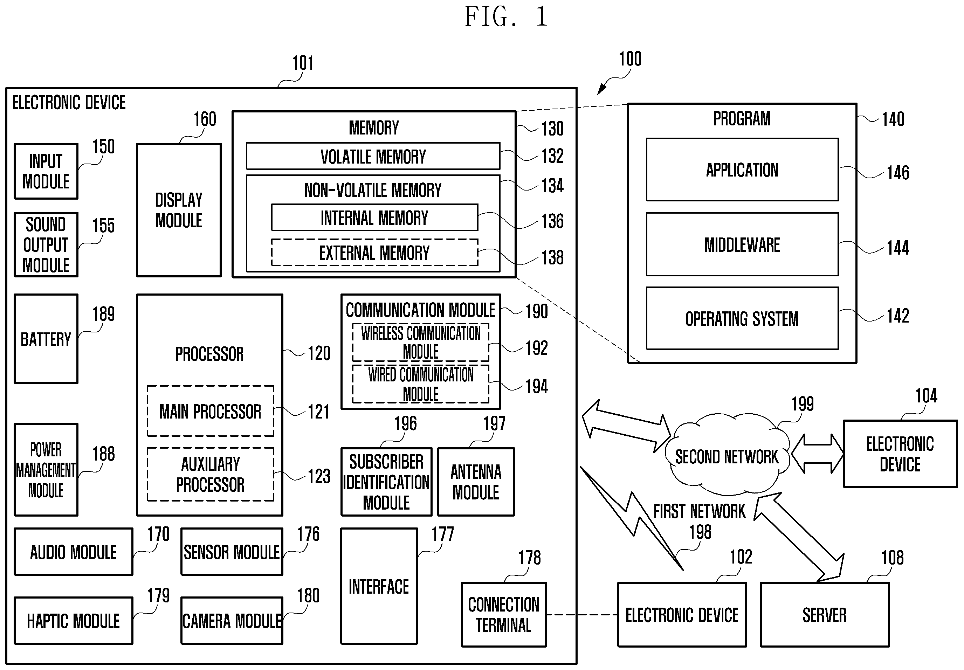

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

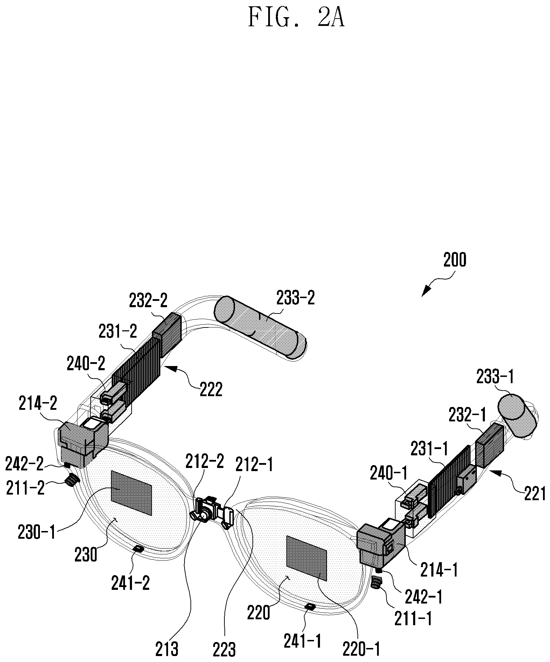

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology. FIG. 2A is a diagram illustrating the configuration of an electronic device 200 (e.g., the electronic device 101 in FIG. 1) according to various embodiments.

In various embodiments, the electronic device 200 may be an electronic device 200 manufactured in a form capable of being worn on a user's head. For example, the electronic device 200 may be implemented in the form of at least one of glasses, goggles, a helmet, or a hat, but is not limited thereto. According to an embodiment, the electronic device 200 may include a plurality of transparent members (e.g., a first transparent member 220 and/or a second transparent member 230) corresponding to the user's two eyes (e.g., the left eye and/or the right eye), respectively.

The electronic device 200 may provide an image related to an augmented reality (AR) service to the user. According to an embodiment, the electronic device 200 may project or display a virtual object onto the first transparent member 220 and/or the second transparent member 230, thereby causing at least one virtual object to be superimposed on the reality perceived by the user through the first transparent member 220 and/or the second transparent member 230 of the electronic device.

Referring to FIG. 2A, the electronic device 200 according to an embodiment may include a main body 223, supports (e.g., a first support 221 and a second support 222), and hinges (e.g., a first hinge 240-1 and a second hinge 240-2).

According to various embodiments, the main body 223 and the supports 221 and 222 may be operatively connected to each other through the hinges 240-1 and 240-2. The main body 223 may include a portion formed to be at least partially seated on the user's nose.

According to various embodiments, the supports 221 and 222 may include a support member formed to be supported on the user's ear. The supports 221 and 222 may include a first support 221 supported on the left ear and/or a second support 222 supported on the right ear.

According to various embodiments, the first hinge 240-1 may connect the first support 221 and the main body 223 so that the first support 221 is rotatable relative to the main body 223. The second hinge portion 240-2 may connect the second support 222 and the main body 223 so that the second support 222 is rotatable relative to the main body 223. According to another embodiment, the hinges 240-1 and 240-2 of the electronic device 200 may be omitted. For example, the main body 223 and the supports 221 and 222 may be directly connected to each other.

According to various embodiments, the main body 223 may include at least one transparent member (e.g., the first transparent member 220 or the second transparent member 230), at least one display module (e.g., a first display module 214-1 or a second display module 214-2), at least one camera module (e.g., a front-shooting camera module 213, an eye tracking camera module (e.g., a first eye tracking camera module 212-1 or a second eye tracking camera module 212-2), a gesture camera module (e.g., a first gesture camera module 211-1 or a second gesture camera module 211-2), and/or at least one microphone (e.g., a first microphone 241-1 or a second microphone 241-2).

In the case of the electronic device 200 described with reference to FIG. 2A, light generated from the display modules 214-1 and 214-2 may be projected onto the transparent members 220 and 230 to display information. For example, light generated from the first display module 214-1 may be projected onto the first transparent member 220, and light generated from the second display module 214-2 may be projected onto the second transparent member 230. The light capable of displaying a virtual object may be projected onto the transparent members 220 and 230 formed of, at least in part, a transparent material, so that the user may perceive a reality on which the virtual object is superimposed. In this case, the display module 160 described in FIG. 1 may be understood as including the display modules 214-1 and 214-2 and the transparent members 220 and 230 of the electronic device 200 illustrated in FIG. 2A. However, the electronic device 200 described in the disclosure is not limited to the configuration of displaying information by the method described above. The display module that may be included in the electronic device 200 may be changed to a display module that includes various methods of displaying information. For example, if a display panel including a light-emitting element of transparent material is built into the transparent member 220 or 230, information may be displayed without a separate display module (e.g., the first display module 214-1 or the second display module 214-2). In this case, the display module 160 described in FIG. 1 may indicate the transparent members 220 and 230 and the display panels included in the transparent members 220 and 230.

According to various embodiments, the virtual object output through the display modules 214-1 and 214-2 may include information related to an application program executed in the electronic device 200 and/or information related to an external object positioned in a real space recognized by the user through the transparent members 220 and 230. The external object may include an object existing in a real space. The real space recognized by the user through the transparent members 220 and 230 will referred to as a field-of-view (FoV) area of the user hereinafter. For example, the electronic device 200 may identify an external object included in at least a portion of an area determined as the user's field of view (FoV) from image information related to the real space obtained through the camera module (e.g., the shooting camera module 213) of the electronic device 200. The electronic device 200 may output a virtual object related to the identified external object through the display modules 214-1 and 214-2.

According to various embodiments, the electronic device 200 may also display a virtual object related to an augmented reality service, based on image information related to the real space obtained through the shooting camera module 213 of the electronic device 200. According to an embodiment, the electronic device 200 may display a virtual object, based on display modules (e.g., the first display module 214-1 corresponding to the left eye and/or the second display module 214-2 corresponding to the right eye) disposed to correspond to both eyes of the user. According to an embodiment, the electronic device 200 may display a virtual object, based on configured configuration information (e.g., resolution, frame rate, brightness, and/or display area).

According to various embodiments, the transparent members 220 and 230 may include condenser lenses (not shown) and/or waveguides (e.g., a first waveguide 220-1 and/or a second waveguide 230-1). For example, the first waveguide 220-1 may be partially positioned on the first transparent member 220, and the second waveguide 230-1 may be partially positioned on the second transparent member 230. Light emitted from the display modules 214-1 and 214-2 may be incident on one side of each of the transparent members 220 and 230. The light incident on one side of each of the transparent members 220 and 230 may be transmitted to the user through the waveguides 220-1 and 230-1 positioned inside the transparent members 220 and 230. The waveguides 220-1 and 230-1 may be made of glass, plastic, or polymer, and may include a nano-pattern formed on one surface of the inner or outer surface. For example, the nano-pattern may include a grating structure having a polygonal or curved shape. According to an embodiment, the light incident on one side of each of the transparent members 220 and 230 may be transmitted or reflected inside the waveguides 220-1 and 230-1 by the nano-pattern and may reach the user. According to an embodiment, the waveguide 220-1 or 230-1 may include at least one diffractive element (e.g., a diffractive optical element (DOE) or a holographic optical element (HOE)) or at least one reflective element (e.g., a reflective mirror). According to an embodiment, the waveguides 220-1 and 230-1 may guide light emitted from the display modules 214-1 and 214-2 to the user's eye by using at least one diffractive element or reflective element.

According to various embodiments, the electronic device 200 may include a shooting camera module 213 (e.g., an RGB camera module) for capturing an image corresponding to the user's field of view (FoV) and/or for measuring a distance to an object, eye tracking camera modules 212-1 and 212-2 for identifying the direction of the user's gaze, and/or gesture camera modules 211-1 and 211-2 for recognizing a predetermined space. For example, the shooting camera module 213 may shoot a photo in a front direction of the electronic device 200, and the eye tracking camera modules 212-1 and 212-2 may shoot a photo in a direction opposite the shooting direction of the shooting camera module 213. For example, the first eye tracking camera module 212-1 may partially shoot the left eye of the user, and the second eye tracking camera module 212-2 may partially shoot the right eye of the user. According to an embodiment, the shooting camera module 213 may include a high-resolution camera module such as a high-resolution (HR) camera module and/or a photo video (PV) camera module. According to an embodiment, the eye tracking camera modules 212-1 and 212-2 may detect the user's pupil and track the gaze direction. The tracked gaze direction may be utilized to move the center of a virtual image including a virtual object in response thereto. According to an embodiment, the gesture camera modules 211-1 and 211-2 may detect a user gesture and/or a predetermined space within a configured distance (e.g., a predetermined space). The gesture camera modules 211-1 and 211-2 may include a camera module including a global shutter (GS). For example, the gesture camera modules 211-1 and 211-2 may be a camera module including a GS capable of reducing the rolling shutter (RS) phenomenon in order to detect and track rapid hand movements and/or fine movements such as fingers.

According to various embodiments, the electronic device 200 may detect an eye corresponding to the dominant eye and/or the auxiliary eye from among the left eye and/or the right eye by using at least one camera module 211-1, 211-2, 212-1, 212-2, or 213. For example, the electronic device 200 may detect an eye corresponding to the dominant eye and/or the auxiliary eye, based on a user gaze direction toward an external object or a virtual object.

The number and positions of the camera modules (e.g., the shooting camera module 213, the eye tracking camera modules 212-1 and 212-2, and/or the gesture camera modules 211-1 and 211-2) included in the electronic device 200 illustrated in FIG. 2A may not be limited. For example, the number and positions of the camera modules (e.g., the shooting camera module 213, the eye tracking camera modules 212-1 and 212-2, and/or the gesture camera modules 211-1 and 211-2) may vary based on the form (e.g., shape or size) of the electronic device 200.

According to various embodiments, the electronic device 200 may include at least one light-emitting device (illumination LED) (e.g., a first light-emitting device 242-1 and a second light-emitting device 242-2) to increase the accuracy of at least one camera module (e.g., the shooting camera module 213, the eye tracking camera modules 212-1 and 212-2, and/or the gesture camera modules 211-1 and 211-2). For example, the first light-emitting device 242-1 may be disposed in a portion corresponding to the user's left eye, and the second light-emitting device 242-2 may be disposed in a portion corresponding to the user's right eye. In an embodiment, the light-emitting devices 242-1 and 242-2 may be used as an auxiliary means to increase the accuracy when capturing the user's pupil with the eye tracking camera modules 212-1 and 212-2, and may include an IR LED that generates light of an infrared wavelength. In addition, the light-emitting devices 242-1 and 242-2 may be used as an auxiliary means when it is not easy to detect a subject to be photographed due to a dark environment or mixing and reflection of multiple light sources when photographing a user's gesture with the gesture camera modules 211-1 and 211-2.

According to various embodiments, the electronic device 200 may include a microphone (e.g., a first microphone 241-1 and a second microphone 241-2) for receiving the user's voice and surrounding sounds. For example, the microphones 241-1 and 241-2 may be components included in the audio module 170 in FIG. 1.

According to various embodiments, the first support 221 and/or the second support 222 may include printed circuit boards (PCBs) (e.g., a first printed circuit board 231-1 and a second printed circuit board 231-2), speakers (e.g., a first speaker 232-1 and a second speaker 232-2), and/or batteries (e.g., a first battery 233-1 and a second battery 233-2).

According to various embodiments, the speakers 232-1 and 232-2 may include a first speaker 232-1 for transmitting an audio signal to the user's left ear and/or a second speaker 232-2 for transmitting an audio signal to the user's right ear. The speakers 232-1 and 232-2 may be components included in the audio module 170 in FIG. 1.

According to various embodiments, the electronic device 200 may have a plurality of batteries 233-1 and 233-2, and may supply power to the printed circuit boards 231-1 and 231-2 through a power management module (e.g., the power management module 188 in FIG. 1). For example, the plurality of batteries 233-1 and 233-2 may be electrically connected to the power management module (e.g., power management module 188 in FIG. 1).

Although the electronic device 200 has been described as a device displaying augmented reality above, the electronic device 200 may be a device displaying virtual reality (VR). In this case, the transparent members 220 and 230 may be formed of an opaque material so that the user is unable to recognize the real space through the transparent members 220 and 230. In addition, the transparent members 220 and 230 may function as a display module 160. For example, the transparent members 220 and 230 may include a display panel for displaying information.

According to various embodiments, the electronic device 200 may include at least one sensor (e.g., a wearing detection sensor, a motion sensor, or a touch sensor) (not shown) and a communication module (not shown). According to an embodiment, at least one sensor may sense whether the electronic device 200 is worn on the user's body and the wearing posture. For example, at least one sensor may include at least one of a proximity sensor and a grip sensor. According to an embodiment, at least one sensor may detect a change in posture caused by the user's movement. For example, at least one sensor may include an acceleration sensor and a gyro sensor. The acceleration sensor may sense acceleration on three axes, and the gyro sensor may sense angular velocity based on three axes. According to an embodiment, at least one sensor may detect a gesture such as a user's finger touch and swipe action. The electronic device 200 may perform a control including at least one of playing music, stopping, playing next music, and/or playing previous music in response to touch data sensed by at least one sensor, or a combination of two or more thereof. According to an embodiment, the communication module may be a module that wirelessly communicates with external devices. For example, the communication module may establish communication with another device and/or an access point (AP) through at least one of a ultra-wide band (UWB) module, a Bluetooth (BT) network, a Bluetooth low energy (BLE) network, a wireless fidelity (Wi-Fi) network, an ANT+ network, a long-term evolution (LTE) network, a 5^{th}-generation (5G) network, and a narrowband Internet-of-Things (NB-IoT) network, or a combination of two or more thereof.

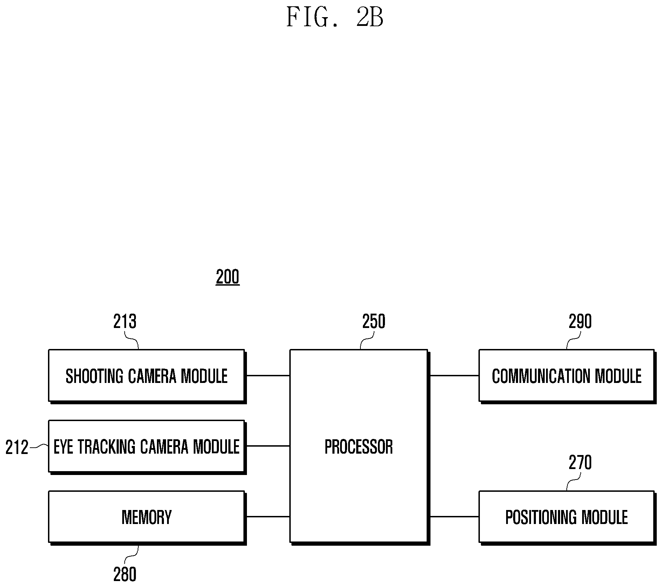

FIG. 2B is a block diagram of an electronic device 200 (e.g., the electronic device 101 in FIG. 1) according to various embodiments.

Referring to FIG. 2B, the electronic device 200 (e.g., the electronic device 101 in FIG. 1) may include a processor 250 (e.g., the processor 120 in FIG. 1), a memory 280 (e.g., the memory 130 in FIG. 1), a communication module 290 (e.g., the communication module 190 in FIG. 1), a shooting camera module 213 (e.g., the shooting camera module 213 in FIG. 2A), an eye tracking camera module 212 (e.g., the eye tracking cameras 212-1 and 212-2 in FIG. 2A), and/or a positioning module 270. The components included in FIG. 2B may be some of the components included in the electronic device 200, and the electronic device 200 may also include various components, as illustrated in FIG. 1, in addition thereto.

According to an embodiment, the shooting camera module 213 may be a camera that captures an image in front of a user wearing the electronic device. The processor 250 may generate an image query by using the image captured by the shooting camera module 213. The image query may refer to a request for a task related to an image captured by the shooting camera module 213. According to one example, the image query may be a request for information related to at least a portion of an image captured by the shooting camera module 213.

According to an embodiment, the eye tracking camera module 212 may obtain an image including the pupil of the user wearing the electronic device 200. The electronic device 200 may detect an area of the pupil of the user from the image obtained by the eye tracking camera module 212 and track the direction of the user's gaze. For example, the processor 250 may detect the user gaze direction, based on the image captured by the eye tracking camera module 212 and, based on the detected gaze direction, determine at least one object (e.g., a primary object or a secondary object) included in the image.

According to an embodiment, the positioning module 270 may measure information related to the position of the electronic device 200.

For example, the positioning module 270 may include a GNSS (e.g., global positioning system (GPS) and/or global navigation satellite system (GLONASS)), thereby measuring the geographical position of the electronic device 200. For example, the GNSS may be a system that measures the current position, based on radio waves transmitted from multiple satellites using GPS sensors and/or GLONASS sensors. For example, the positioning module 270 may measure information related to the position of the electronic device 200 in order to create a space map. For example, the positioning module 270 may measure information related to the position of the electronic device, based on the distance to an external object and information related to movement of the electronic device. The positioning module 270 may include at least one hardware and/or software module used to measure the position of the electronic device 200.

According to an embodiment, the communication module 290 may communicate with an external electronic device through a network (e.g., the first network 198 and/or the second network 199 in FIG. 1) to receive and/or transmit various information. The communication module 290 may include at least some of the configurations and/or functions of the communication module 190 in FIG. 1. The processor 250 may be connected to the communication module 290 and process various information received by the communication module 290 from the external electronic device. In addition, the processor 250 may control the communication module 290 to transmit various information to the external electronic device. For example, the communication module 290 may transmit an image query provided from the processor 250 to a server 1000 and receive a search result of the primary object from the server 1000.

According to an embodiment, the memory 280 may include at least one volatile memory and non-volatile memory to temporarily or non-temporarily store various data. The memory 280 may include at least some of the configurations and/or functions of the memory 130 in FIG. 1. According to an embodiment, the memory 280 may temporarily or non-temporarily store at least one of the learned deep learning model and/or bookmarks related to object information.

According to an embodiment, the processor 250 may be configured to perform operations or data processing related to control and/or communication of the respective components of the electronic device 200, and may be configured as one or more processors. The processor 250 may include at least some of the configuration and/or functions of the processor 120 in FIG. 1. The processor 250 may be operatively, functionally, and/or electrically connected to the respective components of the electronic device 250 including the memory 280, the communication module 290, the shooting camera module 213, the eye tracking camera module 212, and/or the positioning module 270. The operations of the processor 250 may be performed by loading instructions stored in the memory 280.

According to an embodiment, the processor 250 may generate an image query for an object and display information.

The processor 250 according to an embodiment may generate an image query. For example, the processor 250 may generate an image query, based on a primary object to be searched for and a secondary object that is likely to be included in the same image as the primary object in a database. For example, the image query may include a request for information related to at least a portion of the obtained image.

The processor 250 according to an embodiment may create a space map, based on information related to a position, and compare the space map with an actual map, thereby extracting information related to the object. For example, the processor 250 may determine a space for creating a space map, based on a geographical position of the electronic device 200 measured by the positioning module 270. For example, the processor 250 may create a space map using a simultaneous localization and mapping (SLAM) algorithm, based on the determined space. The algorithm used to create the space map is not limited thereto.

The processor 250 according to an embodiment may obtain information related to the primary object from the server 1000. For example, the processor 250 may obtain a search result for the primary object from the server 1000.

The processor 250 according to an embodiment may display information related to the primary object. For example, the processor 250 may display information related to the primary object on a display (not shown) of the electronic device 200 and/or transmit related information to the external electronic device 200 to display information related to the primary object.

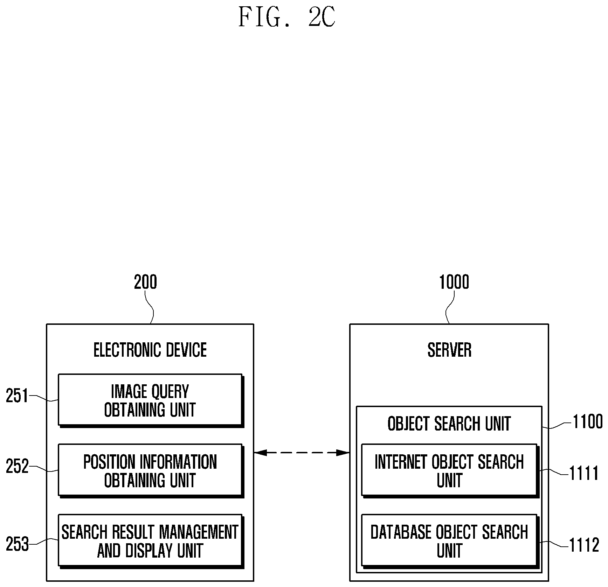

FIG. 2C is a block diagram of an electronic device 200 and a server 1000 according to various embodiments.

According to various embodiments, the electronic device 200 may include an image query obtaining unit 251, a position information obtaining unit 252, and/or a search result management and display unit 253.

According to an embodiment, the image query obtaining unit 251 may generate an image query by using an image captured by the shooting camera module 213. The image query may indicate requesting a task related to an image captured by the shooting camera module 213. For example, the image query may be a request for information related to at least a portion of an image captured by the shooting camera module 213.

For example, the image query obtaining unit 251 may generate an image query, based on a primary object to be searched for and a secondary object that is likely to be included in the same image as the primary object in the database.

According to an embodiment, the position information obtaining unit 252 may create a space map, based on information related to a position, and compare the space map with an actual map to extract information related to the object. For example, the position information obtaining unit 252 may determine a space to create the space map, based on the geographical position of the electronic device 200 measured by the positioning module 270. For example, the processor 250 may create the space map by using a simultaneous localization and mapping (SLAM) algorithm, based on the determined space.

According to an embodiment, the search result management and display unit 253 may obtain information related to the primary object from the server 1000. For example, the search result management and display unit 253 may obtain search results for the primary object from the server 1000.

The search result management and display unit 253 according to an embodiment may display information related to the primary object. For example, the search result management and display unit 253 may display information related to the primary object on a display (not shown) of the electronic device 200 and/or transmit related information to the external electronic device 200 to display the information related to the primary object.

According to various embodiments, the server 1000 may include an object search unit 1100.

According to an embodiment, the object search unit 1100 may include an Internet object search unit 1111 and/or a database object search unit 1112.

According to an embodiment, the server 1000 may include a database that stores information about various objects (e.g., images and descriptions of objects). The object search unit 1100 may identify whether an image including the primary object exists in the database (e.g., a shopping mall and/or store product database).

According to an embodiment, the Internet object search unit 1111 may search for the primary object from another external server through a network, based on the Internet, in response to the absence of information related to the primary object in the database.

According to an embodiment, the database object search unit 1112 may search for the primary object, based on the database, in response to the presence of information related to the primary object in the database.

The object search unit 1100 according to an embodiment may search for information about the primary object included in the image query by using an image-based deep learning algorithm. For example, the object search unit 1100 may search for information about the primary object, based on information about the primary object, the secondary object, a part of the primary object, the degree of association between objects, and/or class information in the image query including information related to the primary object and the secondary object.

The object search unit 1100 according to an embodiment, based on the image query including information related to the primary object and the secondary object, may search for information related to the primary object for an image corresponding to the primary object and/or an image in which the primary object and multiple objects are mixed from the database and/or the Internet. For example, the database and/or the Internet may store a complete image of the primary object, a partial image of the primary object, or an image including both the primary object and the secondary object.

The object search unit 1100 according to an embodiment may assign a priority to the search result, based on the mage query including information related to the primary object and the secondary object. For example, if the image query includes only a partial area of the primary object, the object search unit 1100 may increase the importance of the partial area of the primary object and reduce the importance of the remaining area, and may add the image query to the search candidates. For example, the object search unit 1100 may assign priority to the search result, based on the degree of association between the primary object and the secondary object. For example, the object search unit 1100 may assign priority to the search result, based on the class information of the primary object and the secondary object.

The object search unit 1100 according to an embodiment may filter the search result, based on information based on the actual position of the object (e.g., brand information of the store where the object is positioned), among the searched information of the primary object.

According to various embodiments, the server 1000 may transmit the search result to the electronic device 200. For example, the server 1000 may provide a plurality of search results including priorities to the electronic device 200.

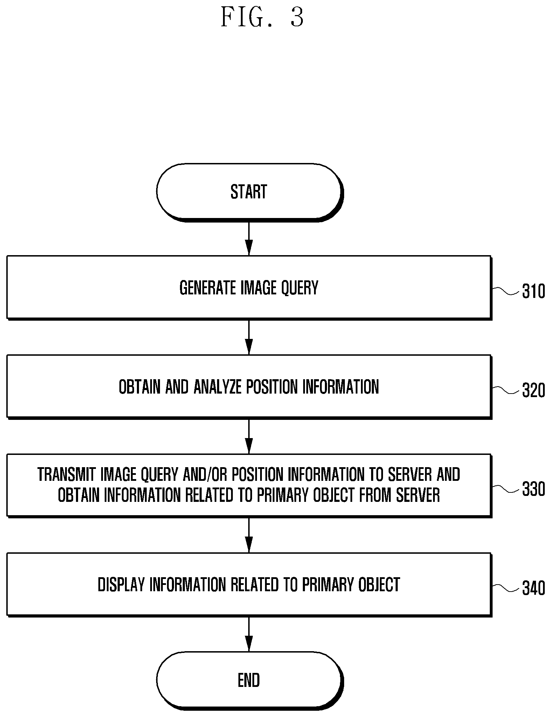

FIG. 3 is a flowchart illustrating a method in which a processor 250 of an electronic device 200 according to various embodiments generates an image query for an object and displays information.

At least some of the illustrated operations may be performed by other components of the electronic device 200, instead of the processor 250.

According to various embodiments, the processor 250 may generate an image query in operation 310.

According to an embodiment, the processor 250 may extract at least one object from an image obtained from the shooting camera module 213. For example, the processor 250 may obtain a front image of a user wearing the electronic device 200 from the shooting camera module 213. For example, the processor 250 may classify the image for respective objects by using a deep learning (e.g., CNN or convolutional layers) algorithm.

According to an embodiment, the processor 250 may determine a primary object from among the classified objects. For example, the primary object may be an object to be searched for. For example, the processor 250 may track the user gaze direction by using the eye tracking camera module 212 and determine an object positioned in the user gaze direction as the primary object from among at least one object extracted from the image obtained from the shooting camera module 213.

According to an embodiment, the processor 250 may identify the association of an adjacent object positioned within a specified distance from the primary object with the primary object, thereby determining a secondary object.

According to an embodiment, the processor 250 may generate an image query, based on the presence or absence of the secondary object according to the determination of the presence or absence of association. For example, if the primary object is partially occluded, the image query may include information related to the occluded area of the primary object. For example, the image query may include the degree of association between the primary object and/or the secondary object, and/or class information.

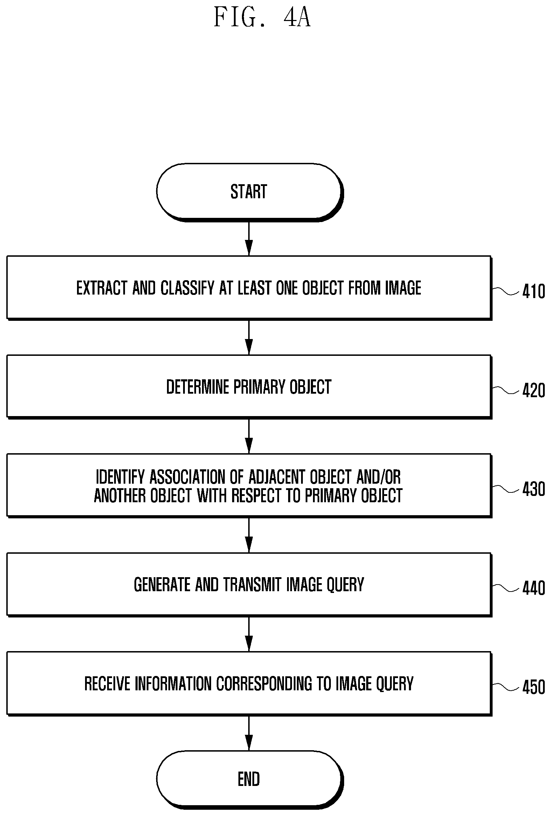

Details related to operation 310 will be described later with reference to FIG. 4A.

The processor 250 according to various embodiments may obtain and analyze position information in operation 320.

According to an embodiment, the processor 250 may obtain information related to the position from the positioning module 270. For example, the positioning module 270 may measure information related to the position of the electronic device 200. For example, the positioning module 270 may include a GNSS (e.g., global positioning system (GPS) and/or global navigation satellite system (GLONASS)), thereby measuring the geographical position of the electronic device 200. For example, the GNSS may be a system that measures the current position, based on radio waves transmitted from multiple satellites using GPS sensors and/or GLONASS sensors.

According to an embodiment, the processor 250 may create a space map, based on the information related to the position. For example, the processor 250 may create a space map by using a simultaneous localization and mapping (SLAM) algorithm, based on the distance to an external object measured by the positioning module 270 and information related to the movement of the electronic device 200.

According to an embodiment, the processor 250 may compare the space map with an actual map to extract information related to the object. For example, the processor 250 may determine the actual position of the object, based on the actual position of the electronic device 200. For example, the processor 250 may calculate the actual position of the object, based on the actual position of the electronic device 200, the user gaze direction, and/or the relative distance from the object in the image. For example, the processor 250 may extract information related to the object (e.g., brand information of the store where the object is positioned), based on the actual position of the object.

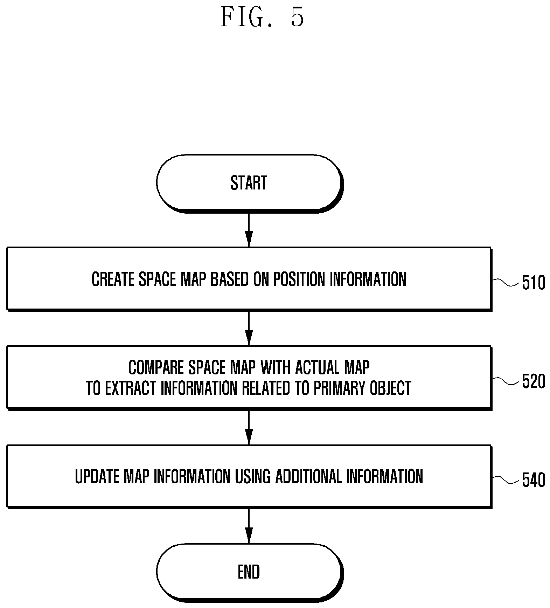

Details related to operation 320 will be described later with reference to FIG. 5.

According to various embodiments, the processor 250 may transmit the image query and/or the position information to the server 1000 and obtain information related to the primary object from the server 1000 in operation 330.

In an embodiment, the processor 250 may transmit the image query and/or the position information to the server 1000. For example, the processor 250 may transmit the image query and/or the position information to the server 1000 by using the communication module 290.

According to an embodiment, the server 1000 may search for the object, based on the database and/or the Internet, using the image query and/or the position information. For example, the server 1000 may search for information about a primary object included in the image query using an image-based deep learning algorithm.

In an embodiment, the server 1000 may transmit a search result to the electronic device 200. For example, the server 1000 may provide a plurality of search results including priorities to the electronic device 200.

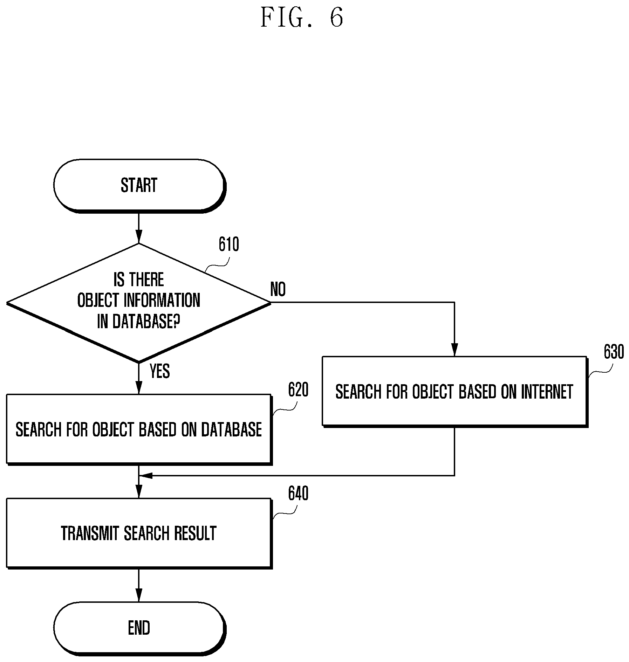

Details related to operation 330 will be described later with reference to FIG. 6.

The processor 250 according to various embodiments may display information related to the primary object in operation 340.

The processor 250 according to an embodiment may obtain information related to the search results related to the primary object transmitted from the server 1000.

The processor 250 according to an embodiment may display information related to the primary object on the display of the electronic device 200 and/or transmit the related information to an external electronic device to display the information related to the primary object.

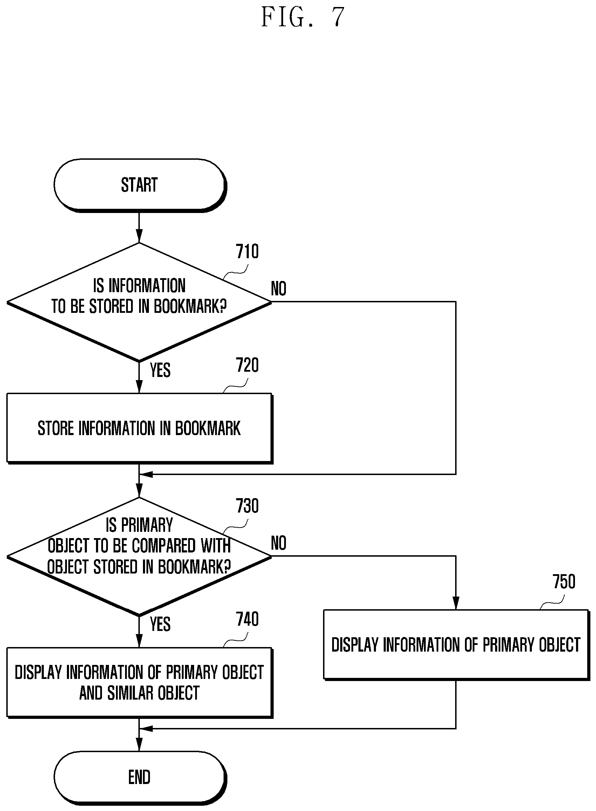

Details related to operation 340 will be described later with reference to FIG. 7.

FIG. 4A is a flowchart illustrating a method for a processor 250 to generate an image query for an object according to various embodiments.

According to various embodiments, the processor 250 may extract and classify at least one object from an image in operation 410.

According to an embodiment, the shooting camera module 213 may capture the front view of a user wearing the electronic device 200. The processor 250 may obtain an image captured from the shooting camera module 213.

According to an embodiment, the processor 250 may extract and classify objects from the image by using a deep learning (e.g., CNN or convolutional layers) algorithm. For example, the processor 250 may extract and classify objects from the image by using a semantic segmentation model for extracting an object from an image and/or an instance segmentation model for classifying the objects in units of pixels in the image, but is not limited thereto.

For example, the processor 250 may classify the object having classes assigned thereto. For example, the processor 250 may classify objects of the image included in class A as "a first object in class A", "a second object in class A", or "a second object in class A", and may classify objects included in class B as "a first object in class B" or "a second object in class B".

In addition, the processor 250 may classify objects assigned classes having multiple hierarchies. For example, the processor 250 may classify an upper class into class A, class B, or class C, and may classify lower classes of each upper class into class A-first class, class A-second class, class B-first class, or class B-second class. For example, the processor 250 may classify objects of the image included in class A-first class into "class A-first class-first object" or "class A-first class-second object", and may classify objects included in class A-second class into "class A-second class-first object" or "class A-second class-second object".

According to various embodiments, the processor 250 may determine a primary object in operation 420.

For example, the primary object may be an object to be searched for among at least one object extracted from the obtained image.

According to an embodiment, the processor 250 may track the gaze direction of the user by using the eye tracking camera module 212. For example, the eye tracking camera module 212 may capture the user's eyeball, and the processor 250 may detect the user's eyeball from the image captured by the eye tracking camera module 212 and then track the gaze direction.

According to an embodiment, the processor 250 may determine an object that matches the tracked user gaze direction as the primary object from among at least one object classified in operation 410. For example, if the user's gaze is directed to "class A-first class-first object" (e.g., top-shirt-first shirt), the processor 250 may determine "class A-first class-first object" as the primary object.

According to various embodiments, the processor 250 may identify the association of adjacent objects and/or other objects with the primary object in operation 430.

According to an embodiment, the processor 250 may identify the association of adjacent objects, positioned within a specified distance from the primary object, with the primary object and determine a secondary object.

For example, the secondary object may be an object that is likely to be included in the same image as the primary object in the database. For example, an item that is frequently matched with the primary object in a shopping mall may be an example of the secondary object. The secondary object may serve as auxiliary information for the primary object in the image query.

According to an embodiment, the processor 250 may determine the presence or absence of the association, based on whether the primary object and the adjacent object have the same upper class.

For example, if the upper class of the primary object classified in operation 410 is the same as the upper class of the adjacent object, the processor 250 may determine that the adjacent object is associated with the primary object and determine it as the secondary object. For example, if the primary object is "class A-first class-first object" (e.g., top-shirt-first shirt) and if the adjacent object is "class A-second class-first object" (e.g., topjacket-first jacket), "class A-second class-first object" may be determined as the secondary object.

For example, if the upper class of the primary object classified in operation 410 and the upper class of the adjacent object are different, the processor 250 may determine that the adjacent object is not associated with the primary object and may not determine the adjacent object as the secondary object.

According to an embodiment, based on determining that the primary object and the adjacent object are associated with each other, the processor 250 may determine the degree of association, based on the similarity of the classes of the primary object and the adjacent object.

For example, the processor 250 may determine the degree of association according to a specified similarity between the class of the primary object and the class of the secondary object. For example, if the primary object is a "shirt" and if the secondary object is a "coat", the degree of association may be determined according to a specified similarity. For example, if the primary object is a "shirt" and if the secondary object is a "cardigan", the degree of association may be determined according to a specified similarity.

In an embodiment, in response to the absence of association between the adjacent object and the primary object, the processor 250 may identify the association between the primary object and another object other than the adjacent object.

For example, if the upper class of the primary object classified in operation 410 and the upper class of another object are the same, the processor 250 may determine that the corresponding object is associated with the primary object and determine it as the secondary object. For example, if the upper class of the primary object classified in operation 410 and the upper class of another object are different, the processor 250 may determine that the corresponding object is not associated with the primary object and may not determine it as the secondary object.

In various embodiments, the processor 250 may generate an image query and transmit it to the server 1000 in operation 440.

In an embodiment, the processor 250 may generate an image query, based on the presence or absence of the secondary object according to the presence or absence of the association.

For example, if the processor 250 does not determine the adjacent object and/or another object as the secondary object in operation 430, the processor 250 may generate an image query, based on the primary object.

For example, if the processor 250 determines the adjacent object and/or another object as the secondary object in operation 430, the processor 250 may generate an image query, based on the primary object and the secondary object. The image query based on the primary object and the secondary object may increase the accuracy of the search because the secondary object serves as additional information of the primary object when searching based on the image query in the server 1000.

According to an embodiment, if the primary object is partially occluded, the processor 250 may generate an image query by adding information related to the occluded area of the primary object.

According to an embodiment, the processor 250 may generate an image query by adding the degree of association of the primary object and/or the secondary object and class information thereof.

The image query according to an embodiment may include information related to the primary object to be searched for and the secondary object associated with the primary object. For example, if the primary object is a partially occluded image, the image query may include information related to the occluded area of the primary object. For example, the image query may include the degree of association of the primary object and/or secondary object and class information thereof.

According to an embodiment, the processor 250 may transmit the generated image query to the server 1000 by using the communication module 290.

According to various embodiments, the processor 250 may receive information corresponding to the image query in operation 450.

According to an embodiment, the processor 250 may receive, from the server 1000, information corresponding to the image query transmitted to the server 1000. For example, the processor 250 may receive information (e.g., price and size) about the primary object from the server 1000.

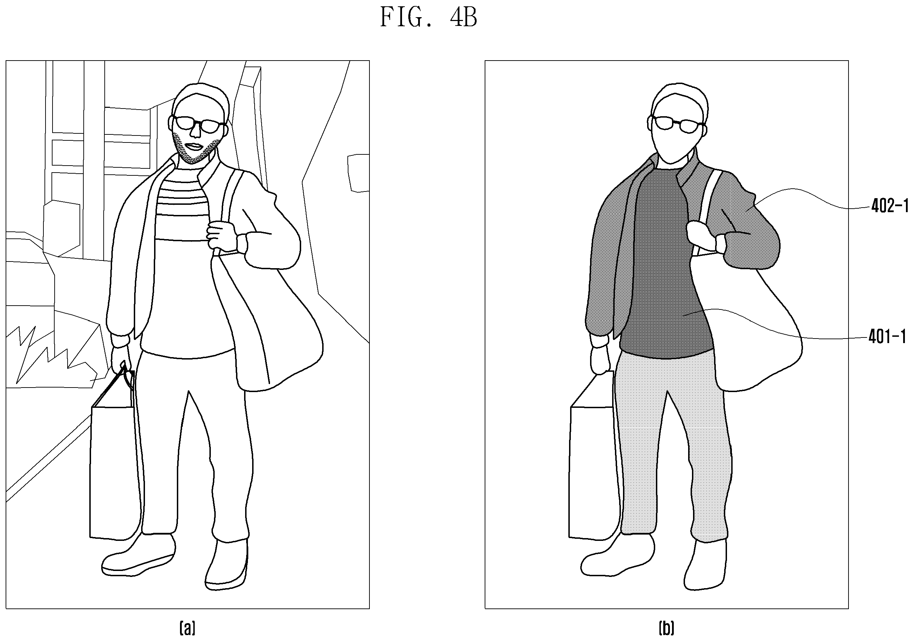

FIG. 4B is a diagram illustrating an example in which a processor 250 determines a primary object and a secondary object according to various embodiments.

Diagram (a) in FIG. 4B may be an original image captured by the shooting camera module 213, and diagram (b) in FIG. 4B may be an example of an image of respective objects extracted by the processor 250.

Referring to diagram (b) in FIG. 4B, the processor 250 may extract a portion of an image including an object from an image corresponding to diagram (a). Alternatively, the processor 250 may extract at least one object from an image corresponding to diagram (a).

According to an embodiment, the processor 250 may classify objects into classes having multiple hierarchies.

For example, the processor 250, using a semantic segmentation and/or instance segmentation model, may extract and classify objects of "shirt" belonging to the "top-shirt" class, "jacket" belonging to the "top-jacket" class, "pants" belonging to the "bottom-pants" class, "shoes" belonging to the "accessory-shoes" class, "first bag" and "second bag" belonging to the "accessory-bag" class, "face" belonging to the "person-face" class, "head" belonging to the "person-head" class, or "sunglasses" belonging to the "accessory-sunglasses" class.

According to an embodiment, the processor 250 may track the gaze direction of the user by using the eye tracking camera module 212. For example, FIG. 4B may illustrate the state where the user is gazing at a "shirt".

According to an embodiment, the processor 250 may determine the "shirt" that matches the tracked user gaze direction as a primary object 401-1.

According to an embodiment, the processor 250 may identify the association of an adjacent object with the "shirt". For example, the processor 250 may recognize the "jacket", which is an object positioned within a specified distance from the "shirt", as an adjacent object, and may identify whether the upper classes of the "shirt" and the "jacket" are the same. Since the upper class of the "shirt" is "top" and since the upper class of the "jacket" is also "top" that matches the same, the processor 250 may determine that the "jacket" is associated with the "shirt" and determine the "jacket" as the secondary object 402-1.

According to an embodiment, the processor 250 may generate an image query with "shirt" as the primary object 401-1 and "jacket" as the secondary object 402-1, and transmit it to the server 1000.

According to an embodiment, the server 1000 may search for information about "shirt", based on the image query. For example, in order to search for "shirt", the server 1000 may search for information by using information related to "shirt" and "jacket".

According to an embodiment, the processor 250 may obtain information about the "shirt" from the server 1000.

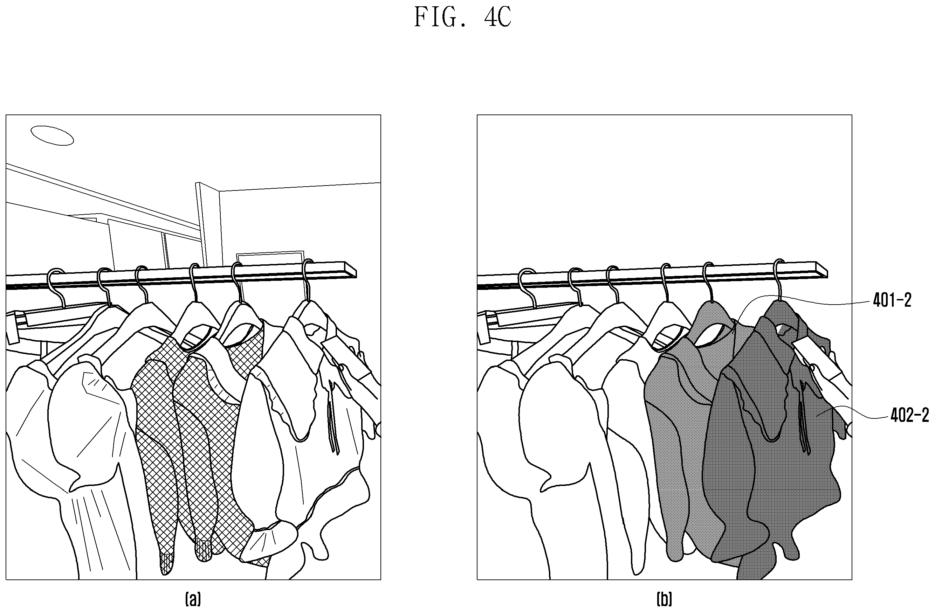

FIG. 4C is a diagram illustrating an example in which a processor 250 determines a primary object and a secondary object according to various embodiments.

Diagram (a) may be an original image captured by the shooting camera module 213, and diagram (b) may be an example of an image of respective objects extracted by the processor 250.

Referring to diagram (b), the processor 250 may extract a portion of an image including an object from an image corresponding to diagram (a). Alternatively, the processor 250 may extract at least one object from an image corresponding to diagram (a).

According to an embodiment, the processor 250 may classify objects into classes having multiple hierarchies.

For example, the processor 250, using a semantic segmentation and/or instance segmentation model, may extract, from the image, objects of "first blouse" belonging to the "top-blouse" class, "second blouse" belonging to the "top-blouse" class, "third blouse" belonging to the "top-blouse" class, "fourth blouse" belonging to the "top-blouse" class, and/or "fifth blouse" belonging to the "top-blouse" class.

According to an embodiment, the processor 250 may track the gaze direction of the user by using the eye tracking camera module 212. For example, FIG. 4C may illustrate the state where the user is gazing at a "second blouse".

According to an embodiment, the processor 250 may determine the "second blouse" that matches the tracked user gaze direction as a primary object 401-2.

According to an embodiment, the processor 250 may identify the association of an adjacent object with the "second blouse". For example, the processor 250 may recognize the "first blouse", which is an object positioned within a specified distance from the "second blouse", as an adjacent object, and may identify whether the upper classes of the "second blouse" and the "first blouse" are the same. Since the upper class of the "second blouse" is "top" and since the upper class of the "first blouse" is also "top" that matches the same, the processor 250 may determine that the "first blouse" is associated with the "second blouse" and determine the "first blouse" as the secondary object 402-2.

According to an embodiment, the processor 250 may generate an image query with "second blouse" as the primary object 401-2 and "first blouse" as the secondary object 402-2, and transmit it to the server 1000.

According to an embodiment, the server 1000 may search for information about "second blouse", based on the image query. For example, in order to search for "second blouse", the server 1000 may search for information by using information related to "second blouse" and "first blouse".

According to an embodiment, the processor 250 may obtain information about the "second blouse" from the server 1000.

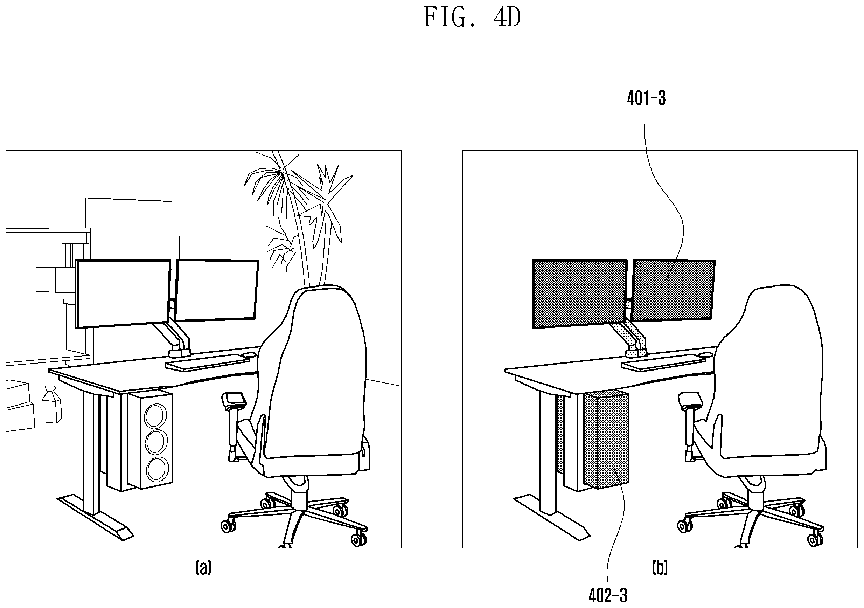

FIG. 4D is a diagram illustrating an example in which a processor 250 determines a primary object and a secondary object according to various embodiments.

Diagram (a) may be an original image captured by the shooting camera module 213, and diagram (b) may be an example of an image of respective objects extracted by the processor 250.

Referring to diagram (b), the processor 250 may extract a portion of an image including an object from an image corresponding to diagram (a). Alternatively, the processor 250 may extract at least one object from an image corresponding to diagram (a).

According to an embodiment, the processor 250 may classify objects into classes having multiple hierarchies.

For example, the processor 250, using a semantic segmentation and/or instance segmentation model, may extract, from the image, objects of "monitor" belonging to the "computer" class, "computer main body" belonging to the "computer" class, "desk" belonging to the "furniture" class, and/or "chair" belonging to the "furniture" class.

According to an embodiment, the processor 250 may track the gaze direction of the user by using the eye tracking camera module 212. For example, FIG. 4D may illustrate the state where the user is gazing at a "monitor".

According to an embodiment, the processor 250 may determine the "monitor" that matches the tracked user gaze direction as a primary object 401-2.

According to an embodiment, the processor 250 may identify the association of an adjacent object with the "monitor". For example, the processor 250 may recognize the "desk", which is an object positioned within a specified distance from the "monitor", as an adjacent object, and may identify whether the upper classes of the "monitor" and the "desk" are the same. Since the upper class of the "monitor" is "computer" and since the upper class of the "desk" is "furniture" that does not match the same, the processor 250 may determine that the "desk" is not associated with the "monitor".

According to an embodiment, the processor 250 may identify the association of another object, other than the adjacent object, with the "monitor". For example, processor 250 may recognize the "main body", which is an object that does not exist within a specified distance from the "monitor", and identify whether the upper classes of the "monitor" and the "main body" are the same. Since the upper class of the "monitor" is "computer" and since the upper class of the "main body" is "computer" that matches the same, the processor 250 may determine that the "main body" and the "monitor" are associated with each other and determine the "main body" as the secondary object 402-3.

According to an embodiment, the processor 250 may generate an image query with "monitor" as the primary object 401-3 and "main body" as the secondary object 402-3, and transmit it to the server 1000.

According to an embodiment, the server 1000 may search for information about "monitor", based on the image query. For example, in order to search for "monitor", the server 1000 may search for information by using information related to "monitor" and "main body".

According to an embodiment, the processor 250 may obtain information about the "monitor" from the server 1000.

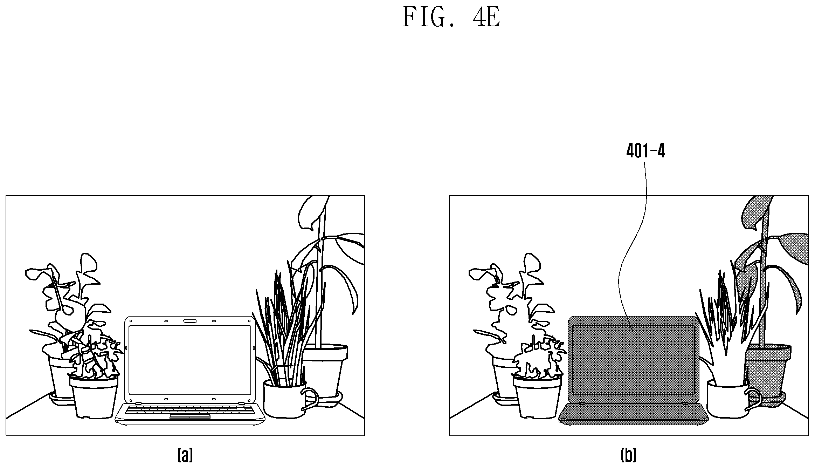

FIG. 4E is a diagram illustrating an example in which a processor 250 determines a primary object and a secondary object according to various embodiments.

Diagram (a) may be an original image captured by the shooting camera module 213, and diagram (b) may be an example of an image of respective objects extracted by the processor 250.

Referring to diagram (b), the processor 250 may extract a portion of an image including an object from an image corresponding to diagram (a). Alternatively, the processor 250 may extract at least one object from an image corresponding to diagram (a).

According to an embodiment, the processor 250 may classify objects into classes having multiple hierarchies.

For example, the processor 250, using a semantic segmentation and/or instance segmentation model, may extract, from the image, objects of "laptop" belonging to the "computer" class, "first flowerpot" belonging to the "plant" class, "second flowerpot" belonging to the "plant" class, "third flowerpot" belonging to the "plant" class, and/or "fourth flowerpot" belonging to the "plant" class.

According to an embodiment, the processor 250 may track the gaze direction of the user by using the eye tracking camera module 212. For example, FIG. 4E may illustrate the state where the user is gazing at a "laptop".

According to an embodiment, the processor 250 may determine the "laptop" that matches the tracked user gaze direction as a primary object 401-4.

According to an embodiment, the processor 250 may identify the association of an adjacent object with the "laptop". For example, the processor 250 may recognize the "first flowerpot", which is an object positioned within a specified distance from the "laptop", as an adjacent object, and may identify whether the upper classes of the "laptop" and the "first flowerpot" are the same. Since the upper class of the "laptop" is "computer" and since the upper class of the "first flowerpot" is "plant" that does not match the same, the processor 250 may determine that the "laptop" is not associated with the "first flowerpot".

According to an embodiment, the processor 250 may identify the association of another object, other than the adjacent object, with the "laptop". For example, processor 250 may recognize the "second flowerpot", which is an object that does not exist within a specified distance from the "laptop", and may determine that the "laptop" is not associated with the "second flowerpot" because the upper class of the "laptop" is "computer" and the upper class of the "second flowerpot" is "plant" that does not match the same.

According to an embodiment, the processor 250 may generate an image query with "laptop" as the primary object 401-4, and transmit it to the server 1000.

According to an embodiment, the server 1000 may search for information about "laptop", based on the image query. For example, in order to search for "laptop", the server 1000 may search for information by using information related to "laptop".

According to an embodiment, the processor 250 may obtain information about the "laptop" from the server 1000.

FIG. 5 is a flowchart illustrating a method in which a processor 250 identifies information related to an object, based on position information, according to various embodiments.

The processor 250 according to various embodiments may create a space map, based on information related to a position, in operation 510.

According to an embodiment, the positioning module 270 may measure information related to the position of the electronic device 200. For example, the positioning module 270 may include a GNSS (e.g., global positioning system (GPS) and/or global navigation satellite system (GLONASS)), thereby measuring the geographical position of the electronic device 200. For example, the GNSS may be a system that measures the current position, based on radio waves transmitted from multiple satellites using GPS sensors and/or GLONASS sensors.

According to an embodiment, the processor 250 may determine a space for creating a space map, based on the geographical position of the electronic device 200 measured by the positioning module 270.

According to an embodiment, the processor 250, based on the determined space, may create a space map using a simultaneous localization and mapping (SLAM) algorithm.

For example, the positioning module 270 may measure information related to the position of the electronic device, based on the distance to an external object and information related to movement of the electronic device.

For example, the processor 250 may measure the distance to an external object, based on images captured by a plurality of cameras (e.g., the shooting camera module 213) and/or a depth sensor (not shown). For example, the processor 250, based on the images captured by a plurality of cameras (e.g., the shooting camera module 213) and/or a depth sensor (not shown), may create a space map by combining the distance to an external object measured by the positioning module 270 and the information related to the movement of the electronic device 200.

For example, the processor 250 may create a space map using an algorithm such as Kalman filtering, particle filtering, and/or Monte Carlo filtering.

According to various embodiments, the processor 250 may compare the space map with an actual map, thereby extracting information related to the primary object in operation 520.

According to an embodiment, the processor 250 may compare the space map created in operation 510 with the actual map to identify the actual position of the electronic device 200. For example, the processor 250 may match the space map with the actual map to identify the actual position of the electronic device 200, based on the position of the electronic device 200 on the space map.

According to an embodiment, the processor 250 may extract information related to the object, based on the actual position of the electronic device 200. For example, the processor 250 may identify the actual position of the object, based on the actual position of the electronic device 200. For example, the processor 250 may calculate the actual position of the object, based on the actual position of the electronic device 200, the user gaze direction, and/or the relative distance from the object in the image. For example, the processor 250 may extract information related to the object (e.g., brand information of the store where the object is positioned), based on the actual position of the object.

The processor 250 according to various embodiments may update the map by using the additional information in operation 530.

The processor 250 according to an embodiment may update the space map by using a text recognition function.

For example, the OCR algorithm is an optical character recognition algorithm that recognizes a text image, and the processor 250 may recognize the name of the brand, based on the OCR algorithm. The processor 250, based on the recognized brand name, may update the space map so that the space map and the actual map match.

FIG. 6 is a flowchart illustrating a method in which a server (e.g., the server 1000 in FIG. 2C) searches for an object according to various embodiments.

According to various embodiments, the server 1000 may obtain an image query from an electronic device 200.

According to an embodiment, the image query may include information related to a primary object to be searched for and a secondary object associated with the primary object. For example, if the primary object is partially occluded, the image query may include information related to the occluded area of the primary object. For example, the image query may include the degree of association between the primary object and/or the secondary object, or class information thereof. For example, the image query may include information based on the actual position of the primary object (e.g., brand information of a store where the object is positioned).

According to various embodiments, the server 1000 may identify whether there is information related to the primary object in the database in operation 610.

According to an embodiment, the server 1000 may identify whether there is an image including the primary object in a database (e.g., a shopping mall and/or store product database).

According to various embodiments, in operation 620, in response to the presence of the information related to the primary object in the database (e.g., "Yes" in operation 610), the server 1000 may search for the primary object, based on the database.

According to various embodiments, in operation 630, in response to the absence of the information related to the primary object in the database (e.g., "No" in operation 620), the server 1000 may search for the primary object based on the Internet.

According to an embodiment, the server 1000 may search for information about the primary object included in the image query by using an image-based deep learning algorithm. For example, the server 1000 may search for information about the primary object, based on information about the primary object, secondary object, a portion of the primary object, the degree of association between objects, and/or class information in the image query including information related to the primary object and secondary object.

According to an embodiment, the server 1000 may search for information related to the primary object for an image corresponding to the primary object and/or an image in which the primary object and a plurality of objects are mixed from the database and/or the Internet, based on the image query including information related to the primary object and secondary object. For example, the database and/or the Internet may store a complete image of the primary object, a partial image of the primary object, or an image including both the primary object and the secondary object.

The server 1000 according to an embodiment may assign a priority to the search result, based on the mage query including information related to the primary object and the secondary object. For example, if the image query includes only a partial area of the primary object, the server 1000 may increase the importance of the partial area of the primary object and reduce the importance of the remaining area, and may add the image query to the search candidates. For example, the server 1000 may assign priority to the search result, based on the degree of association between the primary object and the secondary object. For example, the server 1000 may assign priority to the search result, based on the class information of the primary object and the secondary object.

The server 1000 according to an embodiment may filter the search result, based on information based on the actual position of the object (e.g., brand information of the store where the object is positioned), among the searched information of the primary object.

According to various embodiments, the server 1000 may transmit the search result to the electronic device 200 in operation 640. For example, the server 1000 may provide a plurality of search results including priorities to the electronic device 200.

FIG. 7 is a flowchart illustrating a method in which a processor 250 searches for an object of interest according to various embodiments.

The processor 250 according to various embodiments may receive information about the primary object from the server 1000. For example, the processor 250 may obtain information related to the search result transmitted by the server 1000 in operation 640.

The processor 250 according to various embodiments may determine whether or not to store information related to the search result for the primary object in a storage space (e.g., bookmark) in operation 710.

In an embodiment, the processor 250 may determine whether or not to store information related to the search result for the primary object in a storage space (e.g., bookmark), based on a user input.

In response to determining to store information related to the search result for the primary object in the storage space (e.g., bookmark) (e.g., "Yes" in operation 710), the processor 250 according to various embodiments may store information related to the search result for the primary object in the storage space (e.g., bookmark) in operation 720.

The processor 250 according to various embodiments may determine whether or not to compare the primary object with an object stored in the bookmark in operation 730.

In an embodiment, the processor 250, based on a user input, may determine whether or not to compare the primary object with an object stored in the bookmark.

In response to determining to compare the primary object with a similar object stored in the storage space (e.g., bookmark) (e.g., "Yes" in operation 730), the processor 250 according to various embodiments may display information about the primary object and the similar object stored in the storage space (e.g., bookmark) in operation 740. For example, the processor 250 may display both the search result and information about the similar object stored in the storage space (e.g., bookmark) on the display.

In response to determining not to compare the primary object with a similar object stored in the storage space (e.g., bookmark) (e.g., "No" in operation 730), the processor 250 according to various embodiments may display the search result of the primary object in operation 750.

The processor 250 according to an embodiment may display information about the primary object and/or the similar object stored in the storage space (e.g., bookmark) on the display of the electronic device 200 and/or transmit the related information to an external electronic device 200 to display the information about the primary object and/or the similar object stored in the bookmark.

An electronic device according to various embodiments may include a camera, a communication module, and a processor, and the processor may extract, from an image obtained from the camera, a portion of an image including objects, determine a primary object to be searched for from among the objects in the image, determine an object associated with the primary object as a secondary object from among other objects in the image, generate an image query including a portion of an image including the primary object and/or the secondary object, and including a request for information related to the primary object, and transmit the image query to a server by using the communication module.

In the electronic device according to various embodiments, the processor may classify objects assigned classes in an image obtained from the camera by using a segmentation model using an artificial neural network.

In the electronic device according to various embodiments, the processor may determine an object having the same upper class as the primary object as a secondary object from among other objects in the image.

The electronic device according to various embodiments may further include an eye tracking camera, and the processor may track a user's gaze by using the eye tracking camera and determine the primary object, based on the tracked user's gaze.

In the electronic device according to various embodiments, the processor may further include a positioning module configured to measure information related to a position of the electronic device, and the processor may create a space map, based on the information measured by the positioning module, identify the position of the electronic device by comparing the space map with an actual map, determine an actual position of the primary object, based on the position information of the electronic device, and generate the image query, based further on information related to the actual position of the primary object.

In the electronic device according to various embodiments, the processor may determine a degree of association of the secondary object, based on a pre-specified similarity between a lower class of the primary object and a lower class of the secondary object.

In the electronic device according to various embodiments, the processor may generate an image query, based on information about a partial area of the primary object, in response to the partial area of the primary object not being recognized.

In the electronic device according to various embodiments, the processor may obtain information related to the primary object from the server, and the information related to the primary object may be a search result of the server, based on at least one of the primary object, the secondary object, information about a partial area of the primary object, a degree of association between the primary object and the secondary object, and class information.

The electronic device according to various embodiments may further include a memory configured to store information about the objects and a display, and the processor may display information related to the primary object and information about comparison between the primary object and a similar object stored in the memory on the display.

An operation method of an electronic device according to various embodiments may include extracting, from an image obtained from a camera, a portion of an image including objects, determining a primary object to be searched for from among the objects in the image, determining an object associated with the primary object as a secondary object from among other objects in the image, generating an image query including a portion of an image including the primary object and/or the secondary object, and transmitting the image query to a server.

The operation method of an electronic device according to various embodiments may include classifying objects assigned classes in an image obtained from the camera by using a segmentation model using an artificial neural network.

The operation method of an electronic device according to various embodiments may include determining an object having the same upper class as the primary object as a secondary object from among other objects in the image.

The operation method of an electronic device according to various embodiments may include tracking a user's gaze by using an eye tracking camera and determining the primary object, based on the tracked user's gaze.

The operation method of an electronic device according to various embodiments may include creating a space map, based on information related to a position of the electronic device, identifying the position of the electronic device by comparing the space map with an actual map, determining an actual position of the primary object, based on the position information of the electronic device, and generating the image query, based further on information related to the actual position of the primary object.

The operation method of an electronic device according to various embodiments may include determining a degree of association of the secondary object, based on a pre-specified similarity between a lower class of the primary object and a lower class of the secondary object.

The operation method of an electronic device according to various embodiments may include generating an image query, based further on information about a partial area of the primary object, in response to the partial area of the primary object not being recognized.

The operation method of an electronic device according to various embodiments may include obtaining information related to the primary object from the server, and the information related to the primary object may be a search result of the server, based on at least one of the primary object, the secondary object, information about a partial area of the primary object, a degree of association between the primary object and the secondary object, and class information.

The operation method of an electronic device according to various embodiments may include displaying information related to the primary object and information about comparison between the primary object and a similar object stored in the memory on the display.

A system according to various embodiments may include a server and an electronic device, wherein the electronic device may include a camera, a communication module, and a processor, and the processor may extract, from an image obtained from the camera, a portion of an image including objects, determine a primary object to be searched for from among the objects in the image, determine an object associated with the primary object as a secondary object from among other objects in the image, generate an image query including a portion of an image including the primary object and/or the secondary object, and including a request for information related to the primary object, and transmit the image query to a server by using the communication module, and the server may search for information related to the primary object, based on the image query, and transmit information related to the primary object, as a search result, to the electronic device.

In the system according to various embodiments, the server may search for information related to the primary object, based on at least one of the primary object, the secondary object, information about a partial area of the primary object, a degree of association between the primary object and the secondary object, and class information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera;
a communication module; and
a processor,
wherein the processor is configured to:
extract, from an image obtained from the camera, a portion of an image comprising objects;
determine a primary object to be searched for from among the objects in the image;
determine an object associated with the primary object as a secondary object from among other objects in the image;
generate an image query comprising a portion of an image comprising the primary object and/or the secondary object, and comprising a request for information related to the primary object; and
transmit the image query to a server by using the communication module.

2. The electronic device of claim 1,
wherein the processor is configured to classify objects assigned classes in an image obtained from the camera by using a segmentation model using an artificial neural network.

3. The electronic device of claim 2,
wherein the processor is configured to determine an object having the same upper class as the primary object as a secondary object from among other objects in the image.

4. The electronic device of claim 1,
further comprising an eye tracking camera,
wherein the processor is configured to:
track a user's gaze by using the eye tracking camera; and
determine the primary object, based on the tracked user's gaze.

5. The electronic device of claim 1,
wherein the processor further comprises a positioning module configured to measure information related to a position of the electronic device, and
wherein the processor is configured to:
create a space map, based on the information measured by the positioning module;
identify the position of the electronic device by comparing the space map with an actual map;
determine an actual position of the primary object, based on the position information of the electronic device; and
generate the image query, based further on information related to the actual position of the primary object.

6. The electronic device of claim 3,
wherein the processor is configured to determine a degree of association of the secondary object, based on a pre-specified similarity between a lower class of the primary object and a lower class of the secondary object.

7. The electronic device of claim 6,
wherein the processor is configured to generate an image query, based further on information about a partial area of the primary object, in response to the partial area of the primary object not being recognized.

8. The electronic device of claim 6,
wherein the processor is configured to obtain information related to the primary object from the server, and
wherein the information related to the primary object is a search result of the server, based on at least one of the primary object, the secondary object, information about a partial area of the primary object, a degree of association between the primary object and the secondary object, and class information.

9. The electronic device of claim 8, further comprising:
a memory configured to store information about the objects; and
a display,
wherein the processor is configured to
display information related to the primary object and information about comparison between the primary object and a similar object stored in the memory on the display.

10. An operation method of an electronic device, the method comprising:
extracting, from an image obtained from a camera, a portion of an image comprising objects;
determining a primary object to be searched for from among the objects in the image;
determining an object associated with the primary object as a secondary object from among other objects in the image;
generating an image query comprising a portion of an image comprising the primary object and/or the secondary object; and
transmitting the image query to a server.

11. The operation method of an electronic device of claim 10,
comprising classifying objects assigned classes in an image obtained from the camera by using a segmentation model using an artificial neural network.

12. The operation method of an electronic device of claim 10,
comprising determining an object having the same upper class as the primary object as a secondary object from among other objects in the image.

13. The operation method of an electronic device of claim 10, comprising:
tracking a user's gaze by using an eye tracking camera; and
determining the primary object, based on the tracked user's gaze.

14. The operation method of an electronic device of claim 10,
creating a space map, based on information related to a position of the electronic device;
identifying the position of the electronic device by comparing the space map with an actual map;
determining an actual position of the primary object, based on the position information of the electronic device; and
generating the image query, based further on information related to the actual position of the primary object.

15. The operation method of an electronic device of claim 12,
comprising determining a degree of association of the secondary object, based on a pre-specified similarity between a lower class of the primary object and a lower class of the secondary object.
